# EUROPEAN PATENT SPECIFICATION

(11) **EP 3 041 151 B1**
(45) Date of publication and mention of the grant of the patent: **13.09.2017**
(21) Application number: 13893892.3
(22) Date of filing: 17.09.2013
(51) Int. Cl.: H04B 3/46

(54) **METHOD, DEVICE AND SYSTEM FOR DETECTING DISTURBING LINE**
VERFAHREN, VORRICHTUNG UND SYSTEM ZUR ERKENNUNG EINER STÖRENDEN LEITUNG
PROCÉDÉ, DISPOSITIF ET SYSTÈME DE DÉTECTION DE LIGNE PERTURBATRICE

(43) Date of publication of application: 06.07.2016
(73) Proprietor: Huawei Technologies Co., Ltd., Longgang District Shenzhen, Guangdong 518129 (CN)
(72) Inventor: TU, Jianping, Shenzhen Guangdong 518129 (CN); SHI, Cao, Shenzhen Guangdong 518129 (CN); PAN, Zhong, Shenzhen Guangdong 518129 (CN)
(74) Representative: Thun, Clemens
(86) International application number: PCT/CN2013/083671
(87) International publication number: WO 2015/039289

(56) References cited:
- CN-A- 101 772 900
- CN-A- 102 257 799
- US-A- 5 063 351
- US-B1- 6 259 258
- US-B1- 7 081 763

## Description

### TECHNICAL FIELD

The present invention relates to the field of fault detection technologies, and in particular, to an interfering line detection method, apparatus, and system.

### BACKGROUND

An xDSL (Digital Subscriber Line) technology is a high speed data transmission technology that is applied to a process of telephone twisted pair cable transmission, where xDSL is a generic name of various types of DSLs, including an ADSL (Asymmetric Digital Subscriber Line), a VDSL (Very High Speed DSL,), and the like.
For example, US 7,081,763B1 refers to a test system and method for field measurement of alien cross talk.

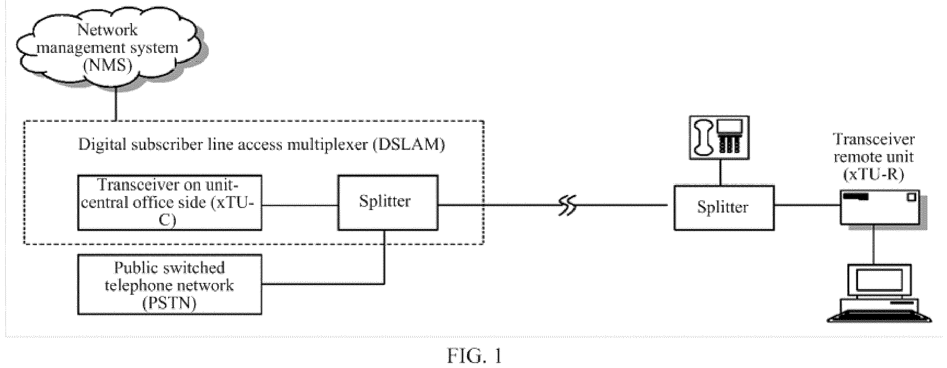

In passband transmission, a high frequency band is allocated to a service in which the xDSL technology is used, and a low frequency band (a baseband portion lower than 4 kHz) is allocated to a POTS (Plain Old Telephone Service); a frequency division multiplexing technology is used to enable the two services to share a same pair of twisted pair cables to implement transmission of respective signals. Referring to FIG 1, in an xDSL system, a customer end at which the xDSL technology is used is connected to a DSL transceiver remote unit (xTU-R), both a customer end at which the plain old telephone service is used and the xTU-R are connected to a splitter, the splitter is connected to a DSLAM (Digital Subscriber Line Access Multiplexer), and the DSLAM is separately connected to a network management system (NMS) and a public switched telephone network (PSTN), where the DSLAM may be connected to multiple pairs of twisted pair cables, that is, the DSLAM may control multiple customer ends, at which the xDSL technology is used, to access the network management system. In the foregoing xDSL system, the splitter receives a signal sent from the DSLAM, splits the signal, and then separately transmits the signal to a customer end at which the plain old telephone service is used and a customer end at which the xDSL technology is used.

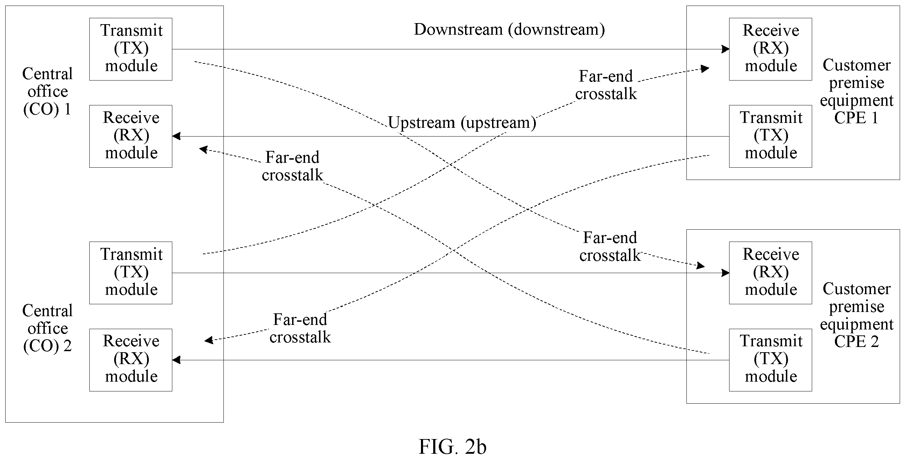

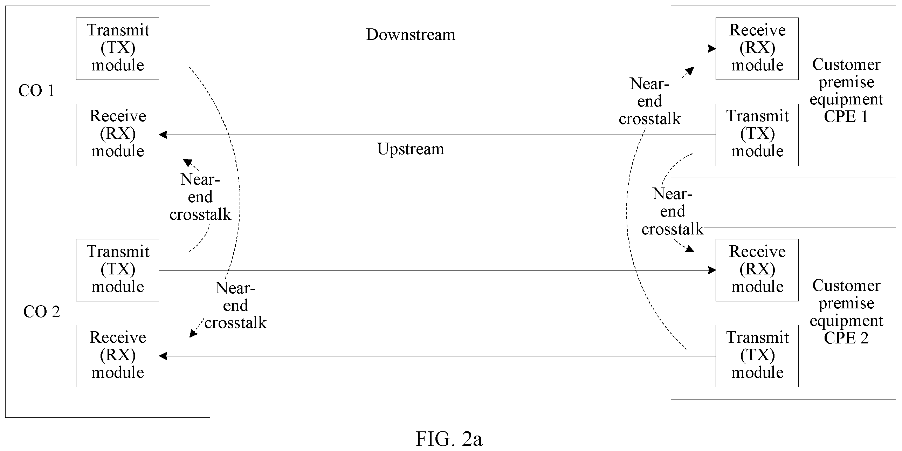

Based on the foregoing xDSL system, when the DSLAM is connected to multiple pairs of twisted pair cables, a problem of mutual interference exists between signals of the multiple pairs of twisted pair cables. Refer to FIG. 2a and FIG. 2b, which are schematic diagrams of different interference types (near-end crosstalk and far-end crosstalk). In the xDSL system, a main interference type is far-end crosstalk. Based on the Shannon theorem, existence of the far-end crosstalk severely affects transmission performance of a line, causing problems of low transmission rate of a channel, poor network stability, and low proportion of services that can be activated for a DSLAM.

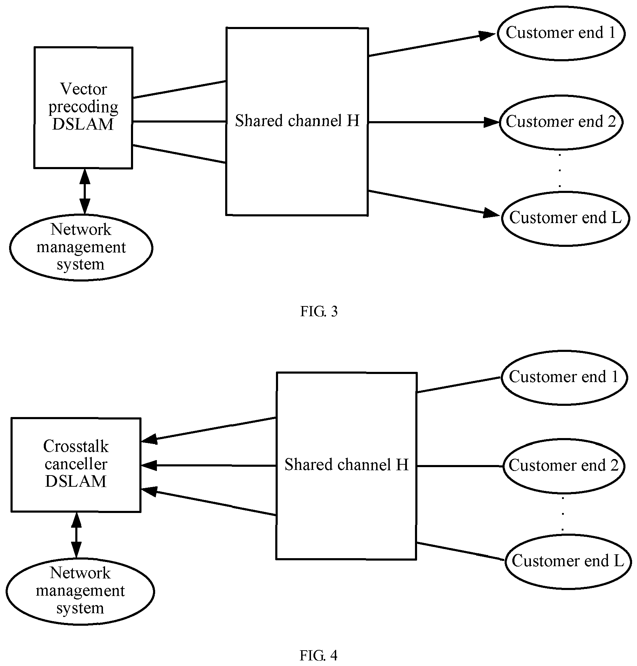

Currently, the foregoing technical problems are generally resolved by using a vectored-DSL (Vectored-DSL) technology. Referring to FIG. 3 and FIG. 4, the vectored-DSL technology is a technology for performing, at a DSLAM end, joint receiving and sending of a signal, and the signal is processed by using a specific signal processing technology, to achieve an objective of eliminating the far-end crosstalk of the DSLAM. A disadvantage of the foregoing technical solution is that, only interference between twisted pair cables that are connected to the DSLAM can be eliminated, and far-end crosstalk to the twisted pair cables of the DSLAM from another DSLAM cannot be eliminated.

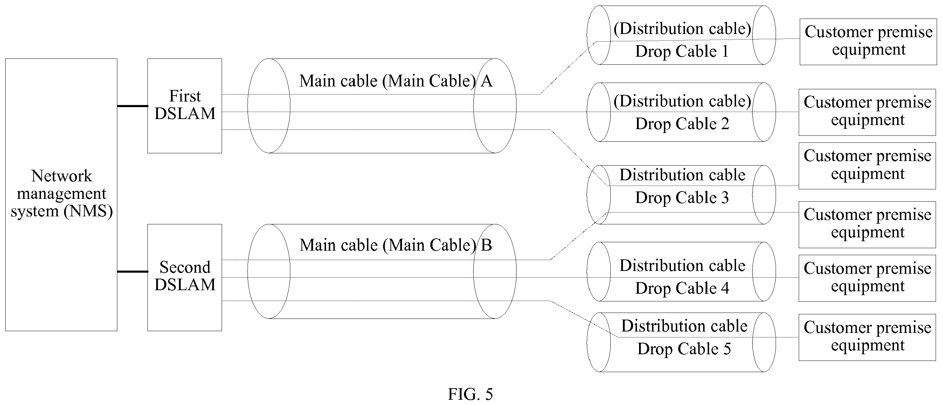

Referring to FIG. 5, when there are multiple DSLAMs (such as a first DSLAM and a second DSLAM), if a disordered cabling problem exists among the multiple DSLAMs, that is, in a distribution cable 3 (drop cable 3) connected to the second DSLAM, some twisted pair cables are also connected to the first DSLAM, and the some twisted pair cables are an external interfering line of the second DSLAM. In addition, when the first DSLAM is a newly established station, or is in a state of having no service, or a customer end corresponding to the interfering line is offline for a long period, it is difficult to eliminate a potential trouble of the far-end crosstalk by using the vectored-DSL technology, thereby affecting line performance and network stability.

As can be seen from this, when cabling is disordered among multiple DSLAMs, problems of low transmission rate of a channel, poor network stability, and low proportion of services that can be activated for a DSLAM exist.

### SUMMARY

Embodiments of the present invention provide an interfering line detection method, apparatus, and system, which are used to resolve problems of low transmission rate of a channel, poor network stability, and low proportion of services that can be activated for a DSLAM that exist when cabling is disordered among multiple DSLAMs.

According to a first aspect, an interfering line detection method performed by an interfering line detection apparatus is provided, the method including:
instructing, according to an interference type that needs to be detected, a first digital subscriber line access multiplexer DSLAM to send, on at least one preset subcarrier, a single-ended loop test SELT signal, where the at least one preset subcarrier is acquired according to a spectrum plan table of a second DSLAM, and a spectrum plan table of a first DSLAM that is configured according to the spectrum plan table of the second DSLAM; and the interference type is near-end crosstalk;
acquiring a line detection parameter value corresponding to the at least one preset subcarrier on the second DSLAM, and a line detection parameter value corresponding to a neighboring subcarrier, where the line detection parameter values are acquired according to the interference type and are reported by the second DSLAM after the first DSLAM sends the SELT signal; and
when it is determined that a difference between the line detection parameter value corresponding to the at least one preset subcarrier and the line detection parameter value corresponding to the neighboring subcarrier reaches a preset threshold, determining that a line corresponding to the at least one preset subcarrier is an interfering line, and determining that the first DSLAM is an interference source of the second DSLAM.

With reference to the first aspect, in a first possible implementation manner, a method of acquiring the at least one preset subcarrier includes: acquiring a frequency overlapping interval between a spectrum of the second DSLAM and a spectrum of the first DSLAM according to the spectrum plan table of the second DSLAM and the spectrum plan table of the first DSLAM, and selecting, from the frequency overlapping interval, at least one frequency as a frequency corresponding to the at least one preset subcarrier.

With reference to the first possible implementation manner of the first aspect, in a second possible implementation manner, from a frequency overlapping interval that exists between an upstream spectrum of the first DSLAM and a downstream spectrum of the second DSLAM, or a frequency overlapping interval that exists between a downstream spectrum of the first DSLAM and an upstream spectrum of the second DSLAM, at least one frequency is selected as the frequency corresponding to the at least one preset subcarrier.

With reference to the second possible implementation manner of the first aspect, in a third possible implementation manner, the line detection parameter value is a channel quality parameter value, or the line detection parameter value is a frequency value corresponding to an echo reflected signal.

According to a second aspect, an interfering line detection apparatus is provided, including:
a first instruction unit, configured to instruct, according to an interference type that needs to be detected, a first digital subscriber line access multiplexer DSLAM to send, on at least one preset subcarrier, a single-ended loop test SELT signal, where the at least one preset subcarrier is acquired according to a spectrum plan table of a second DSLAM, and a spectrum plan table of a first DSLAM that is configured according to the spectrum plan table of the second DSLAM; and the interference type is near-end crosstalk;
an acquiring unit, configured to acquire a line detection parameter value corresponding to the at least one preset subcarrier on the second DSLAM, and a line detection parameter value corresponding to a neighboring subcarrier, where the line detection parameter values are acquired according to the interference type and are reported by the second DSLAM after the first DSLAM sends the SELT signal; and report the acquired line detection parameter value corresponding to the at least one preset subcarrier and line detection parameter value corresponding to the neighboring subcarrier to a determining unit; and
the determining unit, configured to receive the line detection parameter value corresponding to the at least one preset subcarrier and the line detection parameter value corresponding to the neighboring subcarrier that are sent by the acquiring unit; and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM.

With reference to the second aspect, in a first possible implementation manner, the acquiring unit is further configured to acquire a frequency overlapping interval between a spectrum of the second DSLAM and a spectrum of the first DSLAM according to the spectrum plan table of the second DSLAM and the spectrum plan table of the first DSLAM, and select, from the frequency overlapping interval, at least one frequency as a frequency corresponding to the at least one preset subcarrier.

With reference to the first possible implementation manner of the second aspect, in a second possible implementation manner, the acquiring unit is specifically configured to select, from a frequency overlapping interval that exists between an upstream spectrum of the first DSLAM and a downstream spectrum of the second DSLAM, or a frequency overlapping interval that exists between a downstream spectrum of the first DSLAM and an upstream spectrum of the second DSLAM, at least one frequency as the frequency corresponding to the at least one preset subcarrier.

According to a third aspect, an interfering line detection system is provided, including:
a network management system, configured to instruct, according to an interference type that needs to be detected, a first digital subscriber line access multiplexer DSLAM to send, on at least one preset subcarrier, a single-ended loop test SELT signal; acquire a line detection parameter value corresponding to the at least one preset subcarrier on a second DSLAM, and a line detection parameter value corresponding to a neighboring subcarrier, where the line detection parameter values are acquired according to the interference type and are reported by the second DSLAM after the first DSLAM sends the SELT signal; and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM;
the first DSLAM, configured to send, on the at least one preset subcarrier, an SELT signal; and
the second DSLAM, configured to: after the first DSLAM sends the SELT signal, report, according to the interference type, the line detection parameter value corresponding to the at least one preset subcarrier, and the line detection parameter value corresponding to the neighboring subcarrier of the at least one preset subcarrier.

In the embodiments of the present invention, a spectrum plan table is configured for a first DSLAM according to a spectrum plan table of a second DSLAM, and a frequency corresponding to at least one preset subcarrier on which an SELT signal is to be sent is selected, based on the configured spectrum plan table of the first DSLAM, for the first DSLAM; after the first DSLAM sends, on the at least one preset subcarrier, an SELT signal, a line detection parameter value corresponding to the at least one preset subcarrier on the second DSLAM, and a line detection parameter value corresponding to a neighboring subcarrier of the at least one preset subcarrier that are reported by the second DSLAM are acquired; and a difference is calculated for the line detection parameter value corresponding to the neighboring subcarrier of the at least one preset subcarrier, and an interfering line and an interference source of the second DSLAM are determined according to a result of comparison between the difference and a preset threshold. By means of the technical solutions in the present invention, when a case of disordered cabling exists among multiple DSLAMs, if a first DSLAM is an interference source of a second DSLAM, based on an SELT signal sent on one or more preset subcarriers by the first DSLAM, an interfering signal exists on a line corresponding to the one or more preset subcarriers, a difference between a line detection parameter value that corresponds to one or more preset subcarriers on the second DSLAM and a line detection parameter value corresponding to a subcarrier that is respectively neighboring to the one or more subcarriers and that is of all subcarriers of the second DSLAM is acquired, and a frequency of a subcarrier corresponding to a difference of the one or more differences reaches a preset threshold is acquired, where a line corresponding to the frequency of the subcarrier is an interfering line. Therefore, an interfering line can be detected in real time, effectively increasing a transmission rate of a channel and a proportion of services that can be activated for a DSLAM, and ensuring relatively high network stability.

### BRIEF DESCRIPTION OF DRAWINGS

FIG. 1 is a schematic structural diagram of an xDSL system in the prior art;
FIG. 2b is a schematic structural diagram of far-end crosstalk in the prior art;
FIG. 2a is a schematic structural diagram of near-end crosstalk in the prior art;
FIG. 3 is a schematic diagram of joint sending at a DSLAM end in the prior art;
FIG. 4 is a schematic diagram of joint receiving at a DSLAM end in the prior art;
FIG. 5 is a schematic diagram of network cabling in the prior art;

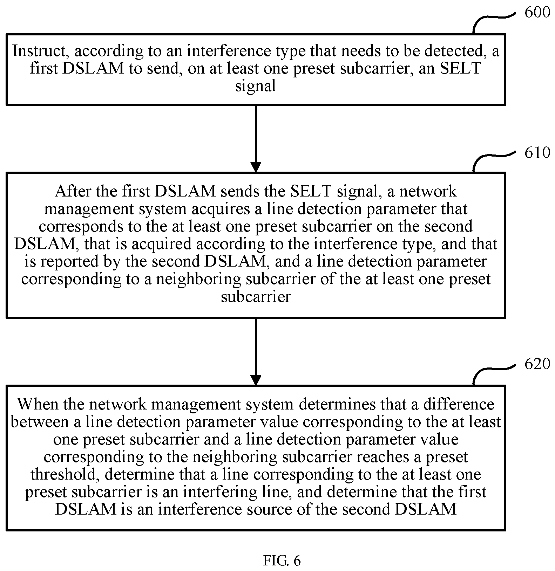

FIG. 6 is a detailed flowchart of interfering line detection according to an embodiment of the present invention;

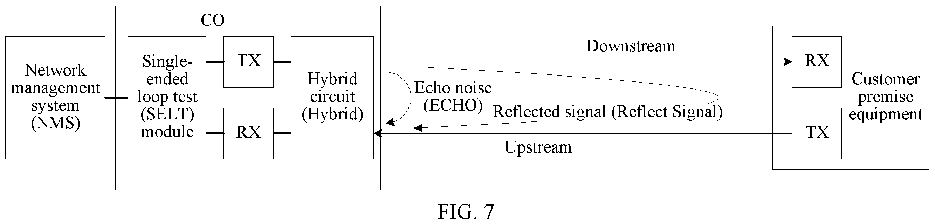

FIG. 7 is a diagram of an SELT signal generation principle according to an embodiment of the present invention;

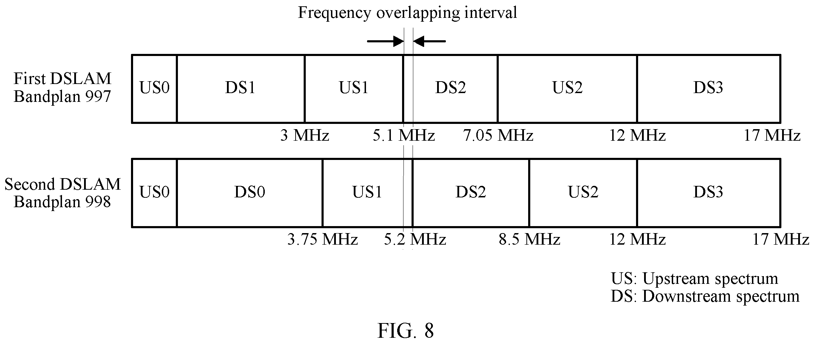

FIG. 8 is a schematic diagram of a frequency overlapping interval according to an embodiment of the present invention;

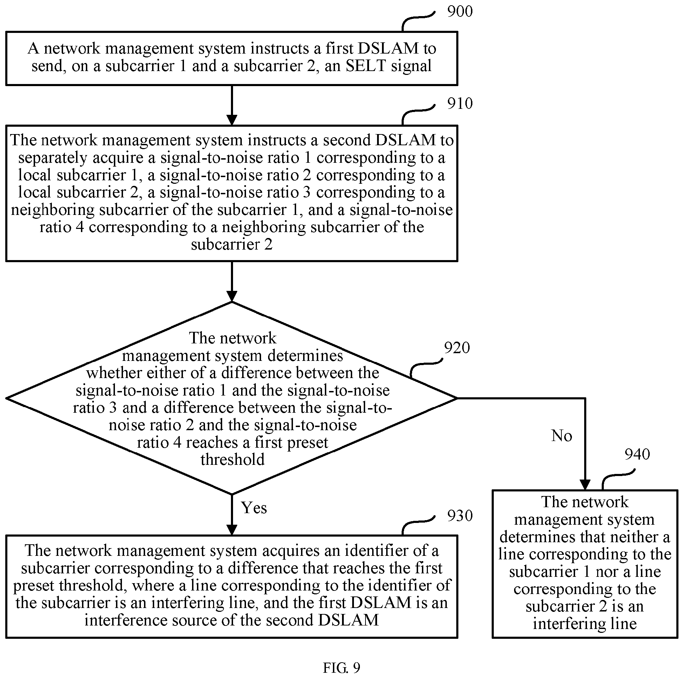

FIG. 9 is a detailed flowchart 1 of interfering line detection in a specific application scenario according to an example of the present invention;

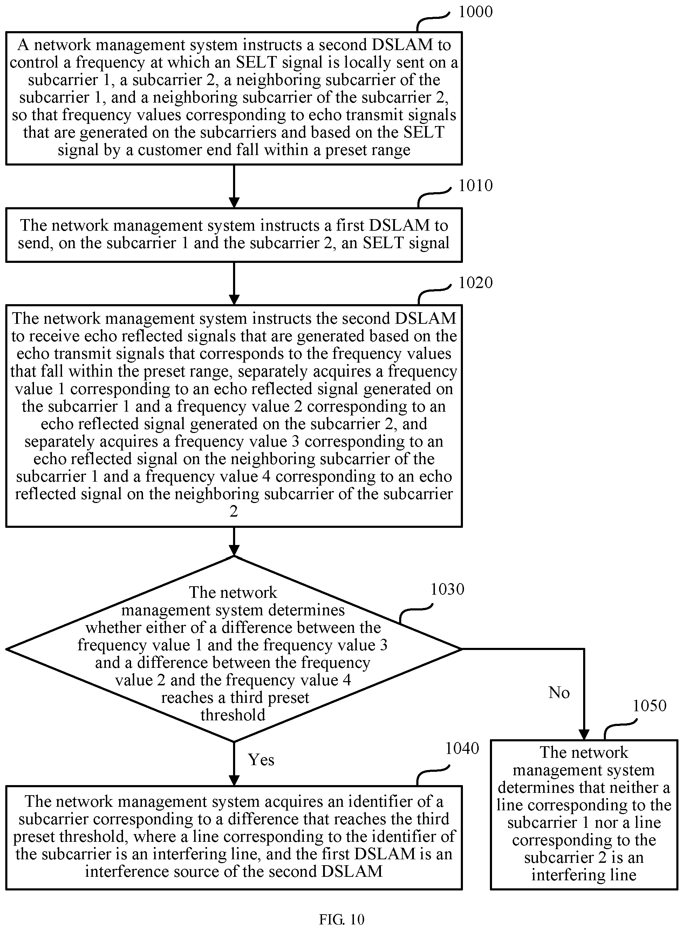

FIG. 10 is a detailed flowchart 2 of interfering line detection in a specific application scenario according to an example of the present invention;

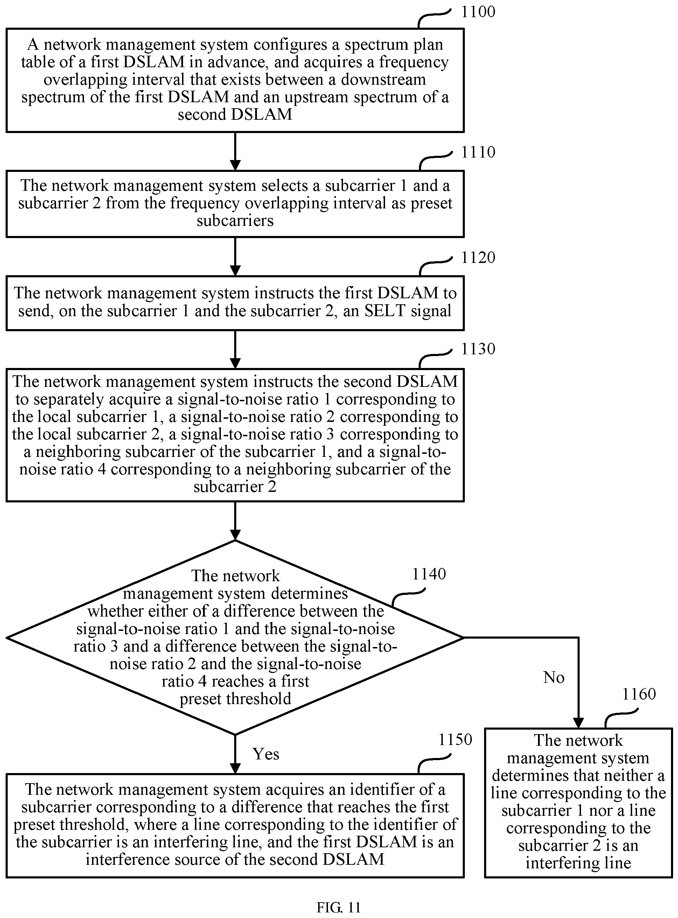

FIG. 11 is a detailed flowchart 3 of interfering line detection in a specific application scenario according to an example of the present invention;

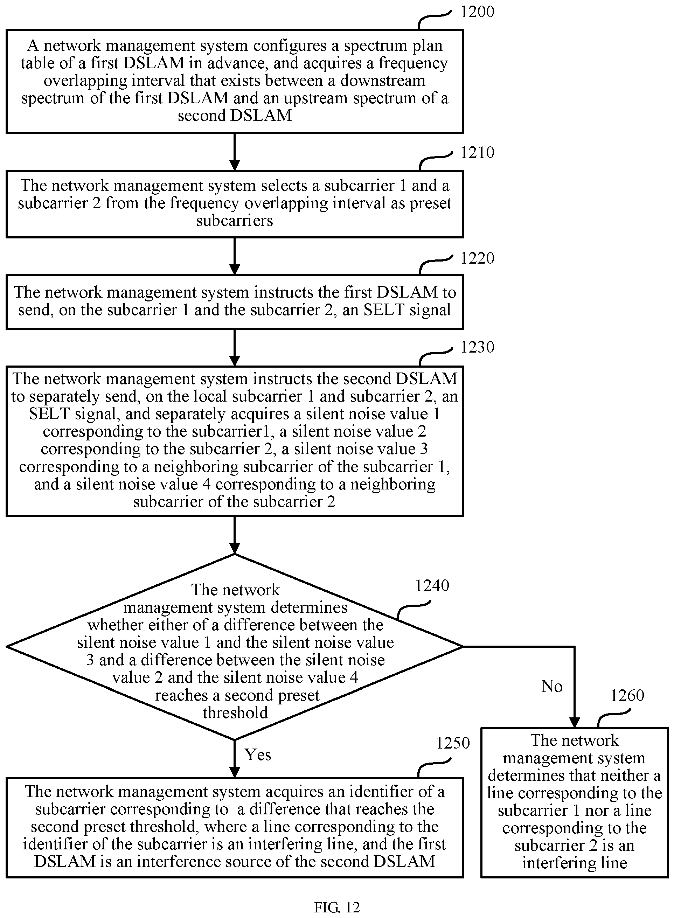

FIG. 12 is a detailed flowchart 4 of interfering line detection in a specific application scenario according to an example of the present invention;

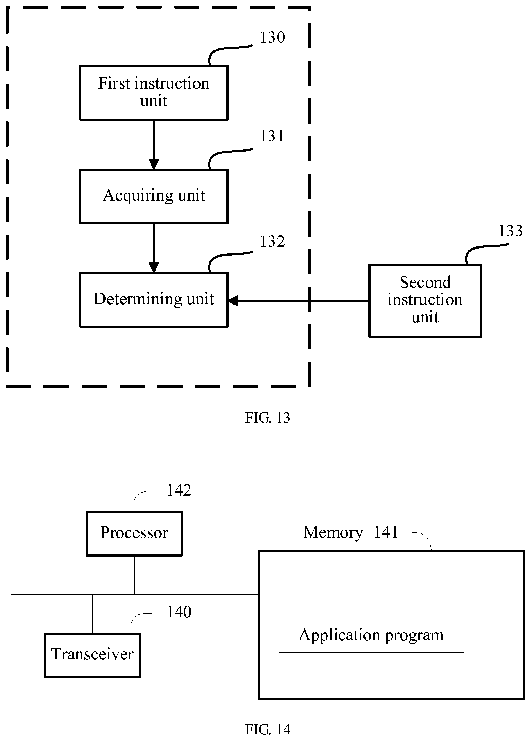

FIG. 13 is a schematic structural diagram of an interfering line detection apparatus according to an embodiment of the present invention; and
FIG. 14 is a schematic structural diagram of an interfering line detection device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

To resolve problems of low transmission rate of a channel, poor network stability, and low proportion of services that can be activated for a DSLAM that exist when cabling is disordered among multiple DSLAMs, in the embodiments of the present invention, a spectrum plan table is configured for a first DSLAM according to a spectrum plan table of a second DSLAM, and a frequency corresponding to at least one preset subcarrier on which an SELT signal is to be sent is selected, based on the configured spectrum plan table of the first DSLAM, for the first DSLAM; after the first DSLAM sends, on the at least one preset subcarrier, an SELT (Single-ended Loop Test, single-ended loop test) signal, a line detection parameter value corresponding to the at least one preset subcarrier on the second DSLAM, and a line detection parameter value corresponding to a neighboring subcarrier of the at least one preset subcarrier that are reported by the second DSLAM are acquired; and a difference is calculated for the line detection parameter value corresponding to the neighboring subcarrier of the at least one preset subcarrier, and an interfering line and an interference source of the second DSLAM are determined according to a result of comparison between the difference and a preset threshold. By means of the technical solutions in the present invention, when a case of disordered cabling exists among multiple DSLAMs, if a first DSLAM is an interference source of a second DSLAM, based on an SELT signal sent on one or more preset subcarriers by the first DSLAM, an interfering signal exists on a line corresponding to the one or more preset subcarriers, a difference between a line detection parameter value that corresponds to one or more preset subcarriers on the second DSLAM and a line detection parameter value corresponding to a subcarrier that is respectively neighboring to the one or more subcarriers on the second DSLAM is acquired, and a frequency of a subcarrier whose difference of the one or more differences reaches a preset threshold is acquired, where a line corresponding to the frequency of the subcarrier is an interfering line. Therefore, an interfering line can be detected in real time, effectively increasing a transmission rate of a channel and a proportion of services that can be activated for a DSLAM, and ensuring relatively high network stability.

The technical solutions in the present invention apply to a network environment in which there are two or more DSLAMs. In the embodiments of the present invention, detailed descriptions are provided by using an example in which there are only two DSLAMs in a network environment. For a diagram of a network system architecture of the network environment, refer to FIG. 5, where a first DSLAM is an interference source to be detected, a second DSLAM is a DSLAM to be detected, that is, an interfered DSLAM, and a device that controls the first DSLAM and the second DSLAM may be a network management system, or may be another management device. In the embodiments of the present invention, the first DSLAM and the second DSLAM are controlled by using a network management system, and the network management system may be an independent device, or may be integrated in the first DSLAM or integrated in the second DSLAM.

The following describes preferred implementation manners of the present invention in detail with reference to the accompanying drawings.

Referring to FIG. 6, in an embodiment of the present invention, a detailed procedure in which a network management system detects an external interfering line is:
Step 600: Instruct, according to an interference type that needs to be detected, a first DSLAM to send, on at least one preset subcarrier, an SELT signal.

In this embodiment of the present invention, referring to FIG. 7, which is a schematic diagram of an SELT signal generation principle, SELT is an single-ended test technology, that is, a signal measurement technology that enables a DSLAM to perform self-transmitting and self-receiving without cooperation of a customer end. The DSLAM presets an SELT signal, and in a downstream direction, a TX module sends the SELT signal through a hybrid circuit (Hybrid) to a line. When the SELT signal reaches the customer end, for example, CPE (Customer premise equipment, customer premise equipment) in FIG. 7, some test signal energy is reflected back due to a factor such as impedance mismatching. In an upstream direction, an SELT module may control an RX module to receive a reflected signal or an upstream silent noise, and a crosstalk signal that comes from another line, and also receive an echo noise (ECHO) that is generated when the SELT signal passes through the hybrid circuit (Hybrid).

In this embodiment of the present invention, the interference type may be either of near-end crosstalk or far-end crosstalk, and an interference type that needs to be detected may be preset. When interference types that need to be detected are different, operations that the network management system controls the first DSLAM to perform are different.

If the interference type is near-end crosstalk, because in the foregoing network environment, passband transmission is performed in a frequency division multiplexing manner, and generated near-end crosstalk is relatively small, in this embodiment of the present invention, near-end crosstalk may be generated by means of configuration and based on a near-end crosstalk generation principle.

In this embodiment, a process in which near-end crosstalk is generated by means of configuration of a spectrum plan table of the first DSLAM and based on the near-end crosstalk generation principle is as follows: The network management system configures the spectrum plan table of the first DSLAM according to a spectrum plan table of a second DSLAM, so that a frequency overlapping interval exists between an upstream spectrum of the second DSLAM and a downstream spectrum of the first DSLAM, or, so that a frequency overlapping interval exists between an downstream spectrum of the second DSLAM and an upstream spectrum of the first DSLAM. In the foregoing process, a line corresponding to at least one preset subcarrier of the first DSLAM is in an off state, that is, a customer end corresponding to the line is in an offline state.

For example, referring to FIG. 8, a power spectrum of the second DSLAM is Bandplan 998, and then a power spectrum of the first DSLAM is configured to Bandplan 997, so that the downstream spectrum of the first DSLAM is 5.1 MHz to 7.05 MHz; because the upstream spectrum of the second DSLAM is 3.75 MHz to 5.2 MHz, a frequency overlapping interval between the upstream spectrum of the second DSLAM and a frequency corresponding to a downstream resource transport block of the first DSLAM is 5.1 MHz to 5.2 MHz.

Further, the network management system selects, from the frequency overlapping interval, one or more frequencies as frequencies of a preset subcarrier, and instructs the first DSLAM to send, on the preset subcarrier, an SELT signal; if the first DSLAM is an interference source of the second DSLAM, that is, a disordered cabling problem exists between the first DSLAM and the second DSLAM, on all lines controlled by the first DSLAM, an interfering line corresponding to the at least one preset subcarrier generates, relative to the second DSLAM, a near-end crosstalk interfering signal, where when a quantity of preset subcarriers determined by the network management system is multiple, that is, when the first DSLAM sends, on multiple downstream preset subcarriers, an SELT signal, the preset subcarriers separately correspond to different lines, that is, a preset subcarrier corresponding to each line has a different frequency, so that at a later stage, a line on which interference exists is accurately located according to the different frequencies of the subcarriers.

Optionally, a frequency corresponding to the preset subcarrier is relatively low. When a frequency of a selected preset subcarrier is relatively low, based on the Shannon theorem, strength of an interfering signal can be effectively reduced, and network stability can be improved.

In the foregoing process, a quantity of preset subcarriers may be one or more; and to ensure the stability of the network, the quantity of the preset subcarriers should not be excessive, and the quantity of the preset subcarriers may be set according to a specific application scenario.

When the preset subcarriers are multiple, optionally, frequencies corresponding to the multiple preset subcarriers are non-neighboring values, that is, any two preset subcarriers of the selected multiple preset subcarriers are non-neighboring subcarriers, and optionally, a difference between the any two preset subcarriers is as large as possible, preventing the preset subcarriers from interfering with each other during detection. By means of the foregoing technical solution, a problem of location error that is caused, when an interfering line is to be located at a later stage, due to that a strong correlation exists between selected preset subcarriers can be prevented.

Further, if the interference type is far-end crosstalk, the network management system instructs the first DSLAM to send, on one or more downstream preset subcarriers, an SELT signal; if the first DSLAM is an interference source of the second DSLAM, that is, a disordered cabling problem exists between the first DSLAM and the second DSLAM, on all lines controlled by the first DSLAM, an interfering line corresponding to the preset subcarriers generates, relative to the second DSLAM, a far-end crosstalk interfering signal, where when a quantity of preset subcarriers determined by the network management system is multiple, that is, when the first DSLAM sends, on multiple downstream preset subcarriers, an SELT signal, the preset subcarriers separately correspond to different lines, that is, a preset subcarrier corresponding to each line has a different frequency, so that at a later stage, a line on which interference exists is accurately located according to the different frequencies of the subcarriers. In the foregoing process, a line corresponding to a preset subcarrier of the first DSLAM is in an off state, that is, a customer end corresponding to the line is in an offline state.

Step 610: After the first DSLAM sends the SELT signal, a network management system acquires a line detection parameter value that corresponds to the at least one preset subcarrier on a second DSLAM, that is acquired according to the interference type, and that is reported by the second DSLAM, and a line detection parameter value corresponding to a neighboring subcarrier of the at least one preset subcarrier.

In this embodiment of the present invention, the line detection parameter value may be a channel quality parameter value, or may be a frequency value corresponding to an echo reflected signal. The channel quality parameter value includes a signal-to-noise ratio and a silent noise value, that is, the line detection parameter value may be a signal-to-noise ratio, or may be a silent noise value, and when the interference type is near-end crosstalk or far-end crosstalk, the channel quality parameter value may be used as the line detection parameter value; however, that the line detection parameter value is a frequency value corresponding to an echo reflected signal corresponds only to a case in which the interference type is far-end crosstalk.

When the line detection parameter value is a channel quality parameter value, and the quantity of preset subcarriers is one, the second DSLAM acquires a channel quality parameter value corresponding to the local preset subcarrier, and a channel quality parameter value corresponding to a neighboring subcarrier of the preset subcarrier; and reports the channel quality parameter value corresponding to the preset subcarrier and the channel quality parameter value corresponding to the neighboring subcarrier of the preset subcarrier to the network management system. When the line detection parameter value is the channel quality parameter value, and the quantity of preset subcarriers is multiple, the second DSLAM separately acquires a channel quality parameter value corresponding to each local preset subcarrier, and a channel quality parameter value corresponding to a neighboring subcarrier of each preset subcarrier; and reports the channel quality parameter values corresponding to the preset subcarriers and the channel quality parameter values corresponding to the neighboring subcarriers to the network management system.

When the line detection parameter value is a frequency value corresponding to the echo reflected signal, and the quantity of preset subcarriers is one, the network management system instructs the second DSLAM to control a frequency at which an SELT signal is locally sent on a preset subcarrier and a neighboring subcarrier of the preset subcarrier, so that a frequency value corresponding to an SELT echo transmit signal that is generated on the preset subcarrier and the neighboring subcarrier and based on the SELT signal by a customer end falls within a preset range, even if a frequency value corresponding to the SELT echo transmit signal that is generated on the preset subcarrier and the neighboring subcarrier and based on the SELT signal by a customer end is less than a frequency value corresponding to the SLET signal sent by the first DSLAM. The foregoing first DSLAM receives an echo reflected signal that is generated based on the SELT echo transmit signal that corresponds to the frequency value that falls within the preset range, acquires a frequency value corresponding to the echo reflected signal generated on a preset subcarrier, and acquires a frequency value corresponding to an echo reflected signal on a neighboring subcarrier of the preset subcarrier; and reports the frequency value corresponding to the echo reflected signal generated on the preset subcarrier, and the frequency value corresponding to the echo reflected signal on the neighboring subcarrier to the network management system.

When the line detection parameter value is a frequency value corresponding to the echo reflected signal, and the quantity of preset subcarriers is multiple, the network management system instructs the second DSLAM to control a frequency at which an SELT signal is locally sent on all preset subcarriers and neighboring subcarriers of the preset subcarriers, so that a frequency value corresponding to an SELT echo transmit signal that is generated on each preset subcarrier and the neighboring subcarriers of the preset subcarriers and based on the SELT signal by a customer end falls within a preset range. The foregoing second DSLAM receives an echo reflected signal that is generated based on the SELT echo transmit signal that corresponds to the frequency value that falls within the preset range, separately acquires a frequency value corresponding to the echo reflected signal generated on multiple preset subcarriers, and separately acquires a frequency value corresponding to an echo reflected signal on a neighboring subcarrier of each preset subcarrier; and reports the frequency value corresponding to the echo reflected signal generated on each preset subcarrier, and the frequency value corresponding to the echo reflected signal on each neighboring subcarrier to the network management system. When a line corresponding to a preset subcarrier is an interfering line, an echo reflected signal on the preset subcarrier includes an interfering signal, and the interfering signal is generated from an SELT signal of the first DSLAM.

In the foregoing process, a line corresponding to a preset subcarrier of the first DSLAM is in an off state, that is, a customer end corresponding to the line is in an offline state; both a line corresponding to a preset subcarrier of the second DSLAM and a line corresponding to a neighboring subcarrier of the preset subcarrier are in an off state, that is, customer ends corresponding to the lines are in an offline state. By means the foregoing technical solution, transmit power of an SELT signal on the second DSLAM is controlled according to the interference type, so that both an echo reflected signal and an echo noise that are on the second DSLAM are less than a crosstalk noise that is received from an interfering line, thereby ensuring that a frequency value corresponding to an echo reflected signal of an interfered line is greater than a power value corresponding to an echo reflected signal of another non-interfered line, and increasing accuracy of line detection.

Step 620: When the network management system determines that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM.

In this example of the present invention, the network management system separately performs different processing according to different line detection parameter values reported by the second DSLAM, which is specifically:
When the line detection parameter value is a signal-to-noise ratio, the network management system acquires, according to a signal-to-noise ratio corresponding to the neighboring subcarrier, and a signal-to-noise ratio corresponding to the at least one preset subcarrier that are reported by the second DSLAM, a difference between the signal-to-noise ratio corresponding to the neighboring subcarrier and the signal-to-noise ratio corresponding to the at least one preset subcarrier, and when it is determined that the difference between the signal-to-noise ratio corresponding to the neighboring subcarrier and the signal-to-noise ratio corresponding to the at least one preset subcarrier reaches a first preset threshold, determines that a line corresponding to the at least one preset subcarrier is an interfering line, and the first DSLAM is an interference source of the second DSLAM. The signal-to-noise ratio corresponding to the at least one preset subcarrier is less than the signal-to-noise ratio corresponding to the neighboring subcarrier of the at least one preset subcarrier, and a value range of the first preset threshold is greater than 3 dB.

When the line detection parameter value is a silent noise value, the network management system acquires, according to a silent noise value corresponding to the neighboring subcarrier, and a silent noise value corresponding to the at least one preset subcarrier that are reported by the second DSLAM, a difference between the silent noise value corresponding to the neighboring subcarrier and the silent noise value corresponding to the at least one preset subcarrier, and when it is determined that the difference between the silent noise value corresponding to the neighboring subcarrier and the silent noise value corresponding to the at least one preset subcarrier reaches a second preset threshold, determines that a line corresponding to the at least one preset subcarrier is an interfering line, and the first DSLAM is an interference source of the second DSLAM. The silent noise value corresponding to the at least one preset subcarrier is greater than the silent noise value corresponding to the neighboring subcarrier of the at least one preset subcarrier, and a value range of the second threshold is greater than 3 dB.

When the line detection parameter value is a frequency value corresponding to the echo reflected signal, the network management system acquires the frequency value corresponding to the echo reflected signal corresponding to the at least one preset subcarrier, and the frequency value corresponding to the echo reflected signal corresponding to the neighboring subcarrier that are reported by the second DSLAM, and when it is determined that a difference between the frequency value of the echo reflected signal corresponding to the at least one preset subcarrier and the frequency value of the echo reflected signal corresponding to the neighboring subcarrier reaches a third preset threshold, determines that a line corresponding to the at least one preset subcarrier is an interfering line, and the first DSLAM is an interference source of the second DSLAM. The frequency value corresponding to the echo reflected signal corresponding to the at least one preset subcarrier is greater than the frequency value corresponding to the echo reflected signal corresponding to the neighboring subcarrier of the at least one preset subcarrier, and a value range of the third threshold is greater than 3 dB.

Further, in this example of the present invention, the network management system may further acquire a historical line detection parameter, on the at least one preset subcarrier, of the second DSLAM, and obtain through comparison a difference between a current line detection parameter, on the at least one preset subcarrier, of the second DSLAM and the historical line detection parameter on the at least one preset subcarrier; and when the difference reaches a preset threshold, determine that the line corresponding to the at least one preset subcarrier is an interfering line. By means of the foregoing technical solution, in a case in which a requirement on accuracy is not high, a line detection parameter of the neighboring subcarrier of the at least one preset subcarrier does not need to be acquired, thereby saving a system resource.

Further, in this example of the present invention, when the first DSLAM sends, on a preset subcarrier, an SELT signal, the network management system simultaneously instructs the second DSLAM to send, on another subcarrier on the second DSLAM except the preset subcarrier, an SELT signal; in this case, whether the second DSLAM is an interference source of the first DSLAM is tested. The foregoing description is provided by using an example in which only whether the first DSLAM is an interference source of the second DSLAM is tested. During the foregoing test, a process of testing whether the second DSLAM is an interference source of the first DSLAM is the same as the foregoing process of testing whether the first DSLAM is an interference source of the second DSLAM, and details are not described again herein.

In this example of the present invention, inside the second DSLAM, a vectored-DSL technology is used to eliminate a crosstalk noise between lines inside the second DSLAM. In this case, only a background noise and interference that is from the first DSLAM exist on a line controlled by the second DSLAM, and a power spectrum density of the background noise is generally less than -130 dBm/Hz; however, a power spectrum density of the crosstalk noise is generally greatly greater than that of the background noise. Therefore, by means of the technical solutions of the present invention, an interfering line can be quickly and easily detected.

With reference to specific application scenarios, the following describes a detailed procedure of interfering line detection by using an example in which a disordered cabling problem exists between a first DSLAM and a second DSLAM, a process of testing whether the first DSLAM is an interference source of the second DSLAM is performed, preset subcarriers are a subcarrier 1 and a subcarrier 2, the subcarrier 1 corresponds to a line 1, the subcarrier 2 corresponds to a line 2, and a spectrum graph corresponding to the first DSLAM is shown in FIG. 8.

### Implementation manner 1

When a preset interference type is far-end crosstalk, a line corresponding to a preset subcarrier of a first DSLAM is in an off state, a line corresponding to a preset subcarrier of a second DSLAM is in an on state, and a line detection parameter value to be acquired is a signal-to-noise ratio, referring to FIG. 9, a detailed procedure of interfering line detection is:
Step 900: A network management system instructs a first DSLAM to send, on a subcarrier 1 and a subcarrier 2, an SELT signal.
   In this example of the present invention, the interference type is preset to be far-end crosstalk, and the line detection parameter value is a signal-to-noise ratio, and therefore, the network management system does not need to configure the second DSLAM and the first DSLAM in advance.
Step 910: The network management system instructs a second DSLAM to separately acquire a signal-to-noise ratio 1 corresponding to a local subcarrier 1, a signal-to-noise ratio 2 corresponding to a local subcarrier 2, a signal-to-noise ratio 3 corresponding to a neighboring subcarrier of the subcarrier 1, and a signal-to-noise ratio 4 corresponding to a neighboring subcarrier of the subcarrier 2.
   In this example of the present invention, the second DSLAM reports the signal-to-noise ratio 1, the signal-to-noise ratio 2, the signal-to-noise ratio 3, and the signal-to-noise ratio 4 to the network management system.
Step 920: The network management system determines whether either of a difference between the signal-to-noise ratio 1 and the signal-to-noise ratio 3 and a difference between the signal-to-noise ratio 2 and the signal-to-noise ratio 4 reaches a first preset threshold, and if either of the differences reaches the first preset threshold, perform step 930; if neither of the differences reaches the first preset threshold, perform step 940. Step 930: The network management system acquires an identifier of a subcarrier corresponding to a difference that reaches the first preset threshold, where a line corresponding to the identifier of the subcarrier is an interfering line, and the first DSLAM is an interference source of the second DSLAM.
   In this example of the present invention, when there are only two differences reaching the first preset threshold, both a line corresponding to the subcarrier 1 and a line corresponding to the subcarrier 2 are interfering lines.
Step 940: The network management system determines that neither a line corresponding to the subcarrier 1 nor a line corresponding to the subcarrier 2 is an interfering line.

In this example of the present invention, when there is no difference reaching the first preset threshold, it cannot indicate that the first DSLAM is not an interference source of the second DSLAM, and the network management system may repeat the foregoing process, and detect all subcarriers of the second DSLAM, to determine whether the first DSLAM is an interference source of the second DSLAM.

### Implementation manner 2

When a preset interference type is far-end crosstalk, a line corresponding to a preset subcarrier of a first DSLAM is in an off state, a line corresponding to a preset subcarrier of a second DSLAM is in an off state, and a line detection parameter value to be acquired is a frequency value corresponding to an echo reflected signal, referring to FIG. 10, a detailed procedure of interfering line detection is:
Step 1000: A network management system instructs a second DSLAM to control a frequency at which an SELT signal is locally sent on a subcarrier 1, a subcarrier 2, a neighboring subcarrier of the subcarrier 1, and a neighboring subcarrier of the subcarrier 2, so that frequency values corresponding to echo transmit signals that are generated on the subcarriers and based on the SELT signal by a customer end fall within a preset range.
   In this embodiment of the present invention, the interference type is preset to be far-end crosstalk, and therefore, the network management system does not need to configure the first DSLAM in advance.
Step 1010: The network management system instructs a first DSLAM to send, on the subcarrier 1 and the subcarrier 2, an SELT signal.
Step 1020: The network management system instructs the second DSLAM to receive echo reflected signals that are generated based on the echo transmit signals that corresponds to the frequency values that fall within the preset range, separately acquires a frequency value 1 corresponding to an echo reflected signal generated on the subcarrier 1 and a frequency value 2 corresponding to an echo reflected signal generated on the subcarrier 2, and separately acquires a frequency value 3 corresponding to an echo reflected signal on the neighboring subcarrier of the subcarrier 1 and a frequency value 4 corresponding to an echo reflected signal on the neighboring subcarrier of the subcarrier 2.

In this embodiment of the present invention, the second DSLAM sends the frequency value 1, the frequency value 2, the frequency value 3, and the frequency value 4 to the network management system.
Step 1030: The network management system determines whether either of a difference between the frequency value 1 and the frequency value 3 and a difference between the frequency value 2 and the frequency value 4 reaches a third preset threshold, and if either of the differences reaches the third preset threshold, perform step 1040; if neither of the differences reaches the third preset threshold, perform step 1050.
Step 1040: The network management system acquires an identifier of a subcarrier corresponding to a difference that reaches the third preset threshold, where a line corresponding to the identifier of the subcarrier is an interfering line, and the first DSLAM is an interference source of the second DSLAM.
Step 1050: The network management system determines that neither a line corresponding to the subcarrier 1 nor a line corresponding to the subcarrier 2 is an interfering line.

In this embodiment of the present invention, when there is no difference reaching the third preset threshold, it cannot indicate that the first DSLAM is not an interference source of the second DSLAM, and the network management system may repeat the foregoing process, and detect all subcarriers of the second DSLAM, to determine whether the first DSLAM is an interference source of the second DSLAM.

### Implementation manner 3

When a preset interference type is near-end crosstalk, a first DSLAM is an newly established station, a line corresponding to a preset subcarrier of the first DSLAM is in an off state, a line corresponding to a preset subcarrier of a second DSLAM is in an on state, and a line detection parameter value to be acquired is a signal-to-noise ratio, referring to FIG. 11, a detailed procedure of interfering line detection is:
Step 1100: A network management system configures a spectrum plan table of a first DSLAM in advance, and acquires a frequency overlapping interval that exists between a downstream spectrum of the first DSLAM and an upstream spectrum of a second DSLAM.
   In this example of the present invention, the network management system configures the spectrum plan table of the first DSLAM according to a spectrum plan table of the second DSLAM. Referring to FIG. 8, the spectrum plan table of the first DSLAM is configured to Bandplan 997, and descriptions are provided by using an example in which the frequency overlapping interval is 5.1 MHz to 5.2 MHz in this table.
Step 1110: The network management system selects a subcarrier 1 and a subcarrier 2 from the frequency overlapping interval as preset subcarriers.
Step 1120: The network management system instructs the first DSLAM to send, on the subcarrier 1 and the subcarrier 2, an SELT signal.
Step 1130: The network management system instructs the second DSLAM to separately acquire a signal-to-noise ratio 1 corresponding to the local subcarrier 1, a signal-to-noise ratio 2 corresponding to the local subcarrier 2, a signal-to-noise ratio 3 corresponding to a neighboring subcarrier of the subcarrier 1, and a signal-to-noise ratio 4 corresponding to a neighboring subcarrier of the subcarrier 2.

In this example of the present invention, the second DSLAM reports the signal-to-noise ratio 1 corresponding to the subcarrier 1, the signal-to-noise ratio 2 corresponding to the subcarrier 2, the signal-to-noise ratio 3 corresponding to the neighboring subcarrier of the subcarrier 1, and the signal-to-noise ratio 4 corresponding to the neighboring subcarrier of the subcarrier 2 to the network management system.
Step 1140: The network management system determines whether either of a difference between the signal-to-noise ratio 1 and the signal-to-noise ratio 3 and a difference between the signal-to-noise ratio 2 and the signal-to-noise ratio 4 reaches a first preset threshold, and if either of the differences reaches the first preset threshold, perform step 1150; if neither of the differences reaches the first preset threshold, perform step 1160.
Step 1150: The network management system acquires an identifier of a subcarrier corresponding to a difference that reaches the first preset threshold, where a line corresponding to the identifier of the subcarrier is an interfering line, and the first DSLAM is an interference source of the second DSLAM.
In this embodiment of the present invention, when there are only two differences reaching the first preset threshold, both a line corresponding to the subcarrier 1 and a line corresponding to the subcarrier 2 are interfering lines.
Step 1160: The network management system determines that neither a line corresponding to the subcarrier 1 nor a line corresponding to the subcarrier 2 is an interfering line.

In this example of the present invention, when there is no difference reaching the first preset threshold, it cannot indicate that the first DSLAM is not an interference source of the second DSLAM, and the network management system may repeat the foregoing process, and detect all subcarriers of the second DSLAM, to determine whether the first DSLAM is an interference source of the second DSLAM.

### Implementation manner 4

When a preset interference type is near-end crosstalk, a first DSLAM is an newly established station, a line corresponding to a preset subcarrier of the first DSLAM is in an off state, a line corresponding to a preset subcarrier of a second DSLAM is in an off state, and a line detection parameter value to be acquired is a signal-to-noise ratio, referring to FIG. 12, a detailed procedure of interfering line detection is:
Step 1200: A network management system configures a spectrum plan table of a first DSLAM in advance, and acquires a frequency overlapping interval that exists between a downstream spectrum of the first DSLAM and an upstream spectrum of a second DSLAM.
   In this example of the present invention, the network management system configures the spectrum plan table of the first DSLAM according to a spectrum plan table of the second DSLAM. Referring to FIG. 8, the spectrum plan table of the first DSLAM is configured to Bandplan 997, and descriptions are provided by using an example in which the frequency overlapping interval is 5.1 MHz to 5.2 MHz in this table.
Step 1210: The network management system selects a subcarrier 1 and a subcarrier 2 from the frequency overlapping interval as preset subcarriers.
Step 1220: The network management system instructs the first DSLAM to send, on the subcarrier 1 and the subcarrier 2, an SELT signal.
Step 1230: The network management system instructs the second DSLAM to separately send, on the local subcarrier 1 and subcarrier 2, an SELT signal, and separately acquires a silent noise value 1 corresponding to the subcarrier 1, a silent noise value 2 corresponding to the subcarrier 2, a silent noise value 3 corresponding to a neighboring subcarrier of the subcarrier 1, and a silent noise value 4 corresponding to a neighboring subcarrier of the subcarrier 2.
   In this example of the present invention, the second DSLAM reports the silent noise value 1 corresponding to the subcarrier 1, the silent noise value 2 corresponding to the subcarrier 2, the silent noise value 3 corresponding to the neighboring subcarrier of the subcarrier 1, and the silent noise value 4 corresponding to the neighboring subcarrier of the subcarrier 2 to the network management system.
Step 1240: The network management system determines whether either of a difference between the silent noise value 1 and the silent noise value 3 and a difference between the silent noise value 2 and the silent noise value 4 reaches a second preset threshold, and if either of the differences reaches the second preset threshold, perform step 1250; if neither of the differences reaches the second preset threshold, perform step 1260.
Step 1250: The network management system acquires an identifier of a subcarrier corresponding to a difference that reaches the second preset threshold, where a line corresponding to the identifier of the subcarrier is an interfering line, and the first DSLAM is an interference source of the second DSLAM.
   In this example of the present invention, when there are only two differences reaching the second preset threshold, both a line corresponding to the subcarrier 1 and a line corresponding to the subcarrier 2 are interfering lines.
Step 1260: The network management system determines that neither a line corresponding to the subcarrier 1 nor a line corresponding to the subcarrier 2 is an interfering line.

In this example of the present invention, when there is no difference reaching the second preset threshold, it cannot indicate that the first DSLAM is not an interference source of the second DSLAM, and the network management system may repeat the foregoing process, and detect all subcarriers of the second DSLAM, to determine whether the first DSLAM is an interference source of the second DSLAM.

Based on the foregoing technical solution, referring to FIG. 13, the present invention provides an interfering line detection apparatus, including a first instruction unit 130, an acquiring unit 131, and a determining unit 132, where:
the first instruction unit 130 is configured to instruct, according to an interference type that needs to be detected, a first digital subscriber line access multiplexer DSLAM to send, on at least one preset subcarrier, a single-ended loop test SELT signal, where the at least one preset subcarrier is acquired according to a spectrum plan table of a second DSLAM, and a spectrum plan table of a first DSLAM that is configured according to the spectrum plan table of the second DSLAM; and the interference type is near-end crosstalk;
the acquiring unit 131 is configured to acquire a line detection parameter value corresponding to the at least one preset subcarrier on the second DSLAM, and a line detection parameter value corresponding to a neighboring subcarrier, where the line detection parameter values are acquired according to the interference type and are reported by the second DSLAM after the first DSLAM sends the SELT signal; and report the acquired line detection parameter value corresponding to the at least one preset subcarrier and line detection parameter value corresponding to the neighboring subcarrier to the determining unit 132; and
the determining unit 132 is configured to receive the line detection parameter value corresponding to the at least one preset subcarrier and the line detection parameter value corresponding to the neighboring subcarrier that are sent by the acquiring unit 131; and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM.

The foregoing apparatus further includes a second instruction unit 133, configured to: when the interference type is far-end crosstalk, and the line detection parameter value is a frequency value corresponding to the echo reflected signal, before the first DSLAM is instructed, according to the interference type that needs to be detected, to send, on at least one preset subcarrier, an SELT signal, instruct the second DSLAM to control a frequency that corresponds to an SELT signal that is sent on the at least one preset subcarrier and the neighboring subcarrier, so that a frequency value corresponding to an SELT echo transmit signal that is generated based on the SELT signal is less than a frequency value that corresponds to the SELT signal that is sent on the at least one preset subcarrier by the first DSLAM.

Referring to FIG. 14, the present invention provides an interfering line detection device, including:
a transceiver 140, configured to send a first indication message to a first DSLAM according to a preset interference type, to instruct the first DSLAM to send, on at least one preset subcarrier, an SELT signal; and send a second indication message to a second DSLAM, to instruct the second DSLAM to detect, according to the interference type after the first DSLAM sends the SELT signal, a line detection parameter value corresponding to the at least one preset subcarrier and a line detection parameter value corresponding to a neighboring subcarrier of the at least one preset subcarrier, where the interference type is near-end crosstalk, where
the transceiver 140 is further configured to receive the line detection parameter value corresponding to the at least one preset subcarrier and the line detection parameter value corresponding to the neighboring subcarrier of the at least one preset subcarrier, and send the parameter values to a processor 142;
a memory 141, configured to store an application program; and
the processor 142, configured to run the application program in the memory 141, to perform the following operations:
   receiving the line detection parameter value corresponding to the at least one preset subcarrier and the line detection parameter value corresponding to the neighboring subcarrier that are sent by the transceiver 140; and when it is determined that a difference between the line detection parameter value corresponding to the at least one preset subcarrier and the line detection parameter value corresponding to the neighboring subcarrier reaches a preset threshold, determining that a line corresponding to the at least one preset subcarrier is an interfering line, and determining that the first DSLAM is an interference source of the second DSLAM.

The transceiver 140 is further configured to: when the interference type is near-end crosstalk, acquire a frequency overlapping interval between a spectrum of the second DSLAM and a spectrum of the first DSLAM according to the spectrum plan table of the second DSLAM and a spectrum plan table of the first DSLAM, and select, from the frequency overlapping interval, at least one frequency as a frequency corresponding to the at least one preset subcarrier.

The processor 142 is specifically configured to: when the interference type is near-end crosstalk, select, from a frequency overlapping interval that exists between an upstream spectrum of the first DSLAM and a downstream spectrum of the second DSLAM, or a frequency overlapping interval that exists between a downstream spectrum of the first DSLAM and an upstream spectrum of the second DSLAM, at least one frequency as the frequency corresponding to the at least one preset subcarrier.

The processor 142 is specifically configured to: when the line detection parameter value is a channel quality parameter value, acquire, according to a signal-to-noise ratio corresponding to the neighboring subcarrier, and a signal-to-noise ratio corresponding to the at least one preset subcarrier that are reported by the second DSLAM, a difference between the signal-to-noise ratio corresponding to the neighboring subcarrier and the signal-to-noise ratio corresponding to the at least one preset subcarrier, and determine whether the difference between the signal-to-noise ratio corresponding to the neighboring subcarrier and the signal-to-noise ratio corresponding to the at least one preset subcarrier reaches a first preset threshold; or acquire, according to a silent noise value corresponding to the neighboring subcarrier, and a silent noise value corresponding to the at least one preset subcarrier that are reported by the second DSLAM, a difference between the silent noise value corresponding to the neighboring subcarrier and the silent noise value corresponding to the at least one preset subcarrier, and determine whether the difference between the silent noise value corresponding to the neighboring subcarrier and the silent noise value corresponding to the at least one preset subcarrier reaches a second preset threshold.

The transceiver 140 is further configured to: when the interference type is far-end crosstalk, and the line detection parameter value is a frequency value corresponding to the echo reflected signal, before the first DSLAM is instructed, according to the preset interference type, to send, on at least one preset subcarrier, an SELT signal, instruct the second DSLAM to control a frequency that corresponds to an SELT signal that is sent on the at least one preset subcarrier and the neighboring subcarrier, so that a frequency value corresponding to an SELT echo transmit signal that is generated based on the SELT signal is less than a frequency value that corresponds to the SELT signal that is sent on the at least one preset subcarrier by the first DSLAM.

The processor 142 is specifically configured to: when the interference type is far-end crosstalk, and the line detection parameter value is the frequency value corresponding to the echo reflected signal, instruct the second DSLAM to report a frequency value corresponding to an echo reflected signal that is generated on the at least one preset subcarrier by the SELT echo transmit signal, and a frequency value corresponding to an echo reflected signal that is generated on the neighboring subcarrier by the SELT echo transmit signal; and acquire the frequency value corresponding to the echo reflected signal on the at least one preset subcarrier, and the frequency value corresponding to the echo reflected signal on the neighboring subcarrier that are reported by the second DSLAM, and determine whether a difference between the frequency value corresponding to the echo reflected signal on the at least one preset subcarrier and the frequency value of the echo reflected signal on the neighboring subcarrier reaches a third preset threshold.

The present invention provides an interfering line detection system, including:
a network management system, configured to instruct, according to an interference type that needs to be detected, a first digital subscriber line access multiplexer DSLAM to send, on at least one preset subcarrier, a single-ended loop test SELT signal; acquire a line detection parameter value corresponding to the at least one preset subcarrier on a second DSLAM, and a line detection parameter value corresponding to a neighboring subcarrier, where the line detection parameter values are acquired according to the interference type and are reported by the second DSLAM after the first DSLAM sends the SELT signal; and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM;
the first DSLAM, configured to send, on the at least one preset subcarrier, an SELT signal; and
the second DSLAM, configured to: after the first DSLAM sends the SELT signal, report, according to the interference type, the line detection parameter value corresponding to the at least one preset subcarrier, and the line detection parameter value corresponding to the neighboring subcarrier of the at least one preset subcarrier.

To sum up, in the embodiments of the present invention, when a case of disordered cabling exists among multiple DSLAMs, if a first DSLAM is an interference source of a second DSLAM, based on an SELT signal sent on one or more preset subcarriers by the first DSLAM, an interfering signal exists on a line corresponding to the one or more preset subcarriers, a difference between a line detection parameter value that corresponds to one or more preset subcarriers on the second DSLAM and a line detection parameter value corresponding to a subcarrier that is respectively neighboring to the one or more subcarriers on the second DSLAM is acquired, and a frequency of a subcarrier whose difference of the one or more differences reaches a preset threshold is acquired, where a line corresponding to the frequency of the subcarrier is an interfering line. Therefore, an interfering line can be detected in real time, effectively increasing a transmission rate of a channel and a proportion of services that can be activated for a DSLAM, and ensuring relatively high network stability.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. An interfering line detection method performed by an interfering line detection apparatus, the method comprising:
instructing, according to an interference type that needs to be detected, a first digital subscriber line access multiplexer, DSLAM, to send, on at least one preset subcarrier, a single-ended loop test SELT signal, wherein the at least one preset subcarrier is acquired according to a spectrum plan table of a second DSLAM, and a spectrum plan table of a first DSLAM that is configured according to the spectrum plan table of the second DSLAM; and the interference type is near-end crosstalk (step 600);
acquiring a line detection parameter value corresponding to the at least one preset subcarrier on the second DSLAM, and a line detection parameter value corresponding to a neighboring subcarrier, wherein the line detection parameter values are acquired according to the interference type and are reported by the second DSLAM after the first DSLAM sends the SELT signal (step 610); and
when it is determined that a difference between the line detection parameter value corresponding to the at least one preset subcarrier and the line detection parameter value corresponding to the neighboring subcarrier reaches a preset threshold, determining that a line corresponding to the at least one preset subcarrier is an interfering line, and determining that the first DSLAM is an interference source of the second DSLAM (step 620).

2. The method according to claim 1, wherein a method of acquiring the at least one preset subcarrier comprises:
acquiring a frequency overlapping interval between a spectrum of the second DSLAM and a spectrum of the first DSLAM according to the spectrum plan table of the second DSLAM and the spectrum plan table of the first DSLAM, and selecting, from the frequency overlapping interval, at least one frequency as a frequency corresponding to the at least one preset subcarrier.

3. The method according to claim 2, wherein the selecting, from the frequency overlapping interval, at least one frequency as a frequency corresponding to the at least one preset subcarrier specifically comprises:
selecting, from a frequency overlapping interval that exists between an upstream spectrum of the first DSLAM and a downstream spectrum of the second DSLAM, or a frequency overlapping interval that exists between a downstream spectrum of the first DSLAM and an upstream spectrum of the second DSLAM, at least one frequency as the frequency corresponding to the at least one preset subcarrier.

4. The method according to claim 3, wherein the line detection parameter value is a channel quality parameter value, or the line detection parameter value is a frequency value corresponding to an echo reflected signal.

5. An interfering line detection apparatus, comprising:
a first instruction unit (130), configured to instruct, according to an interference type that needs to be detected, a first digital subscriber line access multiplexer, DSLAM, to send, on at least one preset subcarrier, a single-ended loop test SELT signal, wherein the at least one preset subcarrier is acquired according to a spectrum plan table of a second DSLAM, and a spectrum plan table of a first DSLAM that is configured according to the spectrum plan table of the second DSLAM; and the interference type is near-end crosstalk;
an acquiring unit (131), configured to acquire a line detection parameter value corresponding to the at least one preset subcarrier on the second DSLAM, and a line detection parameter value corresponding to a neighboring subcarrier, wherein the line detection parameter values are acquired according to the interference type and are reported by the second DSLAM after the first DSLAM sends the SELT signal; and report the acquired line detection parameter value corresponding to the at least one preset subcarrier and line detection parameter value corresponding to the neighboring subcarrier to a determining unit; and
the determining unit (132), configured to receive the line detection parameter value corresponding to the at least one preset subcarrier and the line detection parameter value corresponding to the neighboring subcarrier that are sent by the acquiring unit (131); and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM.

6. The apparatus according to claim 5, wherein the acquiring unit is further configured to:
acquire a frequency overlapping interval between a spectrum of the second DSLAM and a spectrum of the first DSLAM according to the spectrum plan table of the second DSLAM and the spectrum plan table of the first DSLAM, and select, from the frequency overlapping interval, at least one frequency as a frequency corresponding to the at least one preset subcarrier.

7. The apparatus according to claim 5 or 6, wherein the acquiring unit is specifically configured to:
select, from a frequency overlapping interval that exists between an upstream spectrum of the first DSLAM and a downstream spectrum of the second DSLAM, or a frequency overlapping interval that exists between a downstream spectrum of the first DSLAM and an upstream spectrum of the second DSLAM, at least one frequency as the frequency corresponding to the at least one preset subcarrier.

8. An interfering line detection system, comprising:
a network management system, configured to instruct, according to an interference type that needs to be detected, a first digital subscriber line access multiplexer, DSLAM, to send, on at least one preset subcarrier, a single-ended loop test SELT signal; acquire a line detection parameter value corresponding to the at least one preset subcarrier on a second DSLAM, and a line detection parameter value corresponding to a neighboring subcarrier, wherein the line detection parameter values are acquired according to the interference type and are reported by the second DSLAM after the first DSLAM sends the SELT signal; and when it is determined that a difference between the line detection parameter value corresponding to the at least one preset subcarrier and the line detection parameter value corresponding to the neighboring subcarrier reaches a preset threshold, determine that a line corresponding to the at least one preset subcarrier is an interfering line, and determine that the first DSLAM is an interference source of the second DSLAM;
the first DSLAM, configured to send, on the at least one preset subcarrier, an SELT signal; and
the second DSLAM, configured to: after the first DSLAM sends the SELT signal, report, according to the interference type, the line detection parameter value corresponding to the at least one preset subcarrier, and the line detection parameter value corresponding to the neighboring subcarrier of the at least one preset subcarrier.

## Patentansprüche

1. Störleitungs-Detektionsverfahren, das durch eine Störleitungs-Detektionsvorrichtung durchgeführt wird, wobei das Verfahren Folgendes umfasst:
Anweisen gemäß einem Störungstyp, der detektiert werden muss, eines ersten Zugriffsmultiplexers einer digitalen Teilnehmerleitung, DSLAM, auf mindestens einem vorgegebenen Unterträger ein unsymmetrisches Schleifentest-SELT-Signal zu senden, wobei der mindestens eine vorgegebene Unterträger gemäß einer Spektrumplantabelle eines zweiten DSLAM und einer Spektrumplantabelle eines ersten DSLAM erfasst wird, die gemäß der Spektrumplantabelle des zweiten DSLAM konfiguriert ist; und der Störungstyp Nahendnebensprechen ist (Schritt 600);
Erfassen eines Leitungsdetektions-Parameterwerts, der dem mindestens einen vorgegebenen Unterträger an dem zweiten DSLAM entspricht, und eines Leitungsdetektions-Parameterwerts, der einem benachbarten Unterträger entspricht, wobei die Leitungsdetektions-Parameterwerte gemäß dem Störungstyp erfasst werden und durch den zweiten DSLAM gemeldet werden, nachdem der erste DSLAM das SELT-Signal sendet (Schritt 610); und
wenn bestimmt wird, dass eine Differenz zwischen dem Leitungsdetektions-Parameterwert, der dem mindestens einen vorgegebenen Unterträger entspricht, und dem Leitungsdetektions-Parameterwert, der dem benachbarten Unterträger entspricht, einen vorgegebenen Schwellenwert erreicht, Bestimmen, dass eine Leitung, die dem mindestens einen vorgegebenen Unterträger entspricht, eine Störleitung ist, und Bestimmen, dass der erste DSLAM eine Störquelle des zweiten DSLAM ist (Schritt 620).

2. Verfahren nach Anspruch 1, wobei ein Verfahren zum Erfassen des mindestens einen vorgegebenen Unterträgers Folgendes umfasst:
Erfassen eines Frequenzüberlappungsintervalls zwischen einem Spektrum des zweiten DSLAM und einem Spektrum des ersten DSLAM gemäß der Spektrumplantabelle des zweiten DSLAM und der Spektrumplantabelle des ersten DSLAM und Auswählen mindestens einer Frequenz als Frequenz, die dem mindestens einen vorgegebenen Unterträger entspricht, aus dem Frequenzüberlappungsintervall.

3. Verfahren nach Anspruch 2, wobei das Auswählen mindestens einer Frequenz als Frequenz, die dem mindestens einen vorgegebenen Unterträger entspricht, aus dem Frequenzüberlappungsintervall speziell Folgendes umfasst:
Auswählen mindestens einer Frequenz als Frequenz, die dem mindestens einen vorgegebenen Unterträger entspricht, aus einem Frequenzüberlappungsintervall, das zwischen einem stromaufseitigen Spektrum des ersten DSLAM und einem stromabseitigen Spektrum des zweiten DSLAM existiert, oder einem Frequenzüberlappungsintervall, das zwischen einem stromabseitigen Spektrum des ersten DSLAM und einem stromaufseitigen Spektrum des zweiten DSLAM existiert.

4. Verfahren nach Anspruch 3, wobei der Leitungsdetektions-Parameterwert ein Kanalqualitäts-Parameterwert ist oder der Leitungsdetektions-Parameterwert ein Frequenzwert ist, der einem reflektierten Echosignal entspricht.

5. Störleitungs-Detektionsvorrichtung, die Folgendes umfasst:
eine erste Befehlseinheit (130), die dazu konfiguriert ist, gemäß einem Störungstyp, der detektiert werden muss, einen ersten Zugriffsmultiplexer einer digitalen Teilnehmerleitung, DSLAM, anzuweisen, auf mindestens einem vorgegebenen Unterträger ein unsymmetrisches Schleifentest-SELT-Signal zu senden, wobei der mindestens eine vorgegebene Unterträger gemäß einer Spektrumplantabelle eines zweiten DSLAM und einer Spektrumplantabelle eines ersten DSLAM erfasst wird, die gemäß der Spektrumplantabelle des zweiten DSLAM konfiguriert ist; und der Störungstyp Nahendnebensprechen ist;
eine Erfassungseinheit (131), die dazu konfiguriert ist, einen Leitungsdetektions-Parameterwert, der dem mindestens einen vorgegebenen Unterträger an dem zweiten DSLAM entspricht, und einen Leitungsdetektions-Parameterwert, der einem benachbarten Unterträger entspricht, zu erfassen, wobei die Leitungsdetektions-Parameterwerte gemäß dem Störungstyp erfasst werden und durch den zweiten DSLAM gemeldet werden, nachdem der erste DSLAM das SELT-Signal sendet; und den erfassten Leitungsdetektions-Parameterwert, der dem mindestens einen vorgegebenen Unterträger entspricht, und den Leitungsdetektions-Parameterwert, der dem benachbarten Unterträger entspricht, an eine Bestimmungseinheit zu melden; und
die Bestimmungseinheit (132), die dazu konfiguriert ist, den Leitungsdetektions-Parameterwert, der dem mindestens einen vorgegebenen Unterträger entspricht, und den Leitungsdetektions-Parameterwert, der dem benachbarten Unterträger entspricht, die durch die Erfassungseinheit (131) gesendet werden, zu empfangen; und wenn bestimmt wird, dass eine Differenz zwischen dem Leitungsdetektions-Parameterwert, der dem mindestens einen vorgegebenen Unterträger entspricht, und dem Leitungsdetektions-Parameterwert, der dem benachbarten Unterträger entspricht, einen vorgegebenen Schwellenwert erreicht, zu bestimmen, dass eine Leitung, die dem mindestens einen vorgegebenen Unterträger entspricht, eine Störleitung ist, und zu bestimmen, dass der erste DSLAM eine Störquelle des zweiten DSLAM ist.

6. Vorrichtung nach Anspruch 5, wobei die Erfassungseinheit ferner dazu konfiguriert ist:
ein Frequenzüberlappungsintervall zwischen einem Spektrum des zweiten DSLAM und einem Spektrum des ersten DSLAM gemäß der Spektrumplantabelle des zweiten DSLAM und der Spektrumplantabelle des ersten DSLAM zu erfassen und aus dem Frequenzüberlappungsintervall mindestens eine Frequenz als Frequenz, die dem mindestens einen vorgegebenen Unterträger entspricht, auszuwählen.

7. Vorrichtung nach Anspruch 5 oder 6, wobei die Erfassungseinheit speziell dazu konfiguriert ist:
aus einem Frequenzüberlappungsintervall, das zwischen einem stromaufseitigen Spektrum des ersten DSLAM und einem stromabseitigen Spektrum des zweiten DSLAM existiert, oder einem Frequenzüberlappungsintervall, das zwischen einem stromabseitigen Spektrum des ersten DSLAM und einem stromaufseitigen Spektrum des zweiten DSLAM existiert, mindestens eine Frequenz als Frequenz, die dem mindestens einen vorgegebenen Unterträger entspricht, auszuwählen.

8. Störleitungs-Detektionssystem, das Folgendes umfasst:
ein Netzmanagementsystem, das dazu konfiguriert ist, gemäß einem Störungstyp, der detektiert werden muss, einen ersten Zugriffsmultiplexer einer digitalen Teilnehmerleitung, DSLAM, anzuweisen, auf mindestens einem vorgegebenen Unterträger ein unsymmetrisches Schleifentest-SELT-Signal zu senden; einen Leitungsdetektions-Parameterwert, der dem mindestens einen vorgegebenen Unterträger an dem zweiten DSLAM entspricht, und einen Leitungsdetektions-Parameterwert, der einem benachbarten Unterträger entspricht, zu erfassen, wobei die Leitungsdetektions-Parameterwerte gemäß dem Störungstyp erfasst werden und durch den zweiten DSLAM gemeldet werden, nachdem der erste DSLAM das SELT-Signal sendet; und wenn bestimmt wird, dass eine Differenz zwischen dem Leitungsdetektions-Parameterwert, der dem mindestens einen vorgegebenen Unterträger entspricht, und dem Leitungsdetektions-Parameterwert, der dem benachbarten Unterträger entspricht, einen vorgegebenen Schwellenwert erreicht, zu bestimmen, dass eine Leitung, die dem mindestens einen vorgegebenen Unterträger entspricht, eine Störleitung ist, und zu bestimmen, dass der erste DSLAM eine Störquelle des zweiten DSLAM ist;
den ersten DSLAM, der dazu konfiguriert ist, ein SELT-Signal auf dem mindestens einen vorgegebenen Unterträger zu senden; und
den zweiten DSLAM, der dazu konfiguriert ist: nachdem der erste DSLAM das SELT-Signal sendet, gemäß dem Störungstyp den Leitungsdetektions-Parameterwert, der dem mindestens einen vorgegebenen Unterträger entspricht, und den Leitungsdetektions-Parameterwert, der dem benachbarten Unterträger des mindestens einen vorgegebenen Unterträgers entspricht, zu melden.

## Revendications

1. Procédé de détection de ligne de brouillage exécuté par un appareil de détection de ligne de brouillage, le procédé comprenant :
l'instruction, conformément à un type de brouillage qui doit être détecté, à un premier multiplexeur d'accès de ligne d'abonné numérique, DSLAM, d'envoyer, sur au moins une sous-porteuse prédéfinie, un signal de test de boucle asymétrique SELT, dans lequel l'au moins une sous-porteuse prédéfinie est acquise conformément à une table de plan de spectre d'un second DSLAM, et d'une table de plan de spectre d'un premier DSLAM qui est configuré conformément à la table de plan de spectre du second DSLAM ; et le type de brouillage est la diaphonie en champ proche (étape 600) ;
l'acquisition d'une valeur de paramètre de détection de ligne correspondant à l'au moins une sous-porteuse prédéfinie sur le second DSLAM, et d'une valeur de paramètre de détection de ligne correspondant à une sous-porteuse voisine, dans lequel les valeurs de paramètres de détection de ligne sont acquises conformément au type de brouillage et sont rapportées par le second DSLAM après que le premier DSLAM envoie le signal SELT (étape 610) ; et
quand il est déterminé qu'une différence entre la valeur de paramètre de détection de ligne correspondant à l'au moins une sous-porteuse prédéfinie et la valeur de paramètre de détection de ligne correspondant à la sous-porteuse voisine atteint un seuil prédéfini, la détermination qu'une ligne correspondant à l'au moins une sous-porteuse prédéfinie est une ligne de brouillage, et la détermination que le premier DSLAM est une source de brouillage du second DSLAM (étape 620).

2. Procédé selon la revendication 1, dans lequel un procédé d'acquisition de l'au moins une sous-porteuse prédéfinie comprend :
l'acquisition d'un intervalle de chevauchement de fréquences entre un spectre du second DSLAM et un spectre du premier DSLAM conformément à la table de plan de spectre du second DSLAM et de la table de plan de spectre du premier DSLAM, et la sélection, à partir de l'intervalle de chevauchement de fréquences, d'au moins une fréquence comme fréquence correspondant à l'au moins une sous-porteuse prédéfinie.

3. Procédé selon la revendication 2, dans lequel la sélection, à partir de l'intervalle de chevauchement de fréquences, d'au moins une fréquence comme fréquence correspondant à l'au moins une sous-porteuse prédéfinie comprend spécifiquement : la sélection, à partir d'un intervalle de chevauchement de fréquences qui existe entre un spectre amont du premier DSLAM et un spectre aval du second DSLAM, ou d'un intervalle de chevauchement de fréquences qui existe entre un spectre aval du premier DSLAM et un spectre amont du second DSLAM, d'au moins une fréquence comme la fréquence correspondant à l'au moins une sous-porteuse prédéfinie.

4. Procédé selon la revendication 3, dans lequel la valeur de paramètre de détection de ligne est une valeur de paramètre de qualité de canal, ou la valeur de paramètre de détection de ligne est une valeur de fréquence correspondant à un signal d'écho réfléchi.

5. Appareil de détection de ligne de brouillage, comprenant :
une première unité d'instruction (130), configurée pour donner instruction, conformément à un type de brouillage qui doit être détecté, à un premier multiplexeur d'accès de ligne d'abonné numérique, DSLAM, d'envoyer, sur au moins une sous-porteuse prédéfinie, un signal de test de boucle asymétrique SELT, dans lequel l'au moins une sous-porteuse prédéfinie est acquise conformément à une table de plan de spectre d'un second DSLAM, et d'une table de plan de spectre d'un premier DSLAM qui est configuré conformément à la table de plan de spectre du second DSLAM ; et le type de brouillage est la diaphonie en champ proche ;
une unité d'acquisition (131), configurée pour acquérir une valeur de paramètre de détection de ligne correspondant à l'au moins une sous-porteuse prédéfinie sur le second DSLAM, et une valeur de paramètre de détection de ligne correspondant à une sous₋porteuse voisine, dans lequel les valeurs de paramètres de détection de ligne sont acquises conformément au type de brouillage et sont rapportées par le second DSLAM après que le premier DSLAM envoie le signal SELT ; et rapporter la valeur de paramètre de détection de ligne acquise correspondant à l'au moins une sous-porteuse prédéfinie et la valeur de paramètre de détection de ligne correspondant à la sous-porteuse voisine à une unité de détermination ; et
l'unité de détermination (132), configurée pour recevoir la valeur de paramètre de détection de ligne correspondant à l'au moins une sous-porteuse prédéfinie et la valeur de paramètre de détection de ligne correspondant à la sous-porteuse voisine qui sont envoyées par l'unité d'acquisition (131) ; et quand il est déterminé qu'une différence entre la valeur de paramètre de détection de ligne correspondant à l'au moins une sous-porteuse prédéfinie et la valeur de paramètre de détection de ligne correspondant à la sous-porteuse voisine atteint un seuil prédéfini, déterminer qu'une ligne correspondant à l'au moins une sous-porteuse prédéfinie est une ligne de brouillage, et déterminer que le premier DSLAM est une source de brouillage du second DSLAM.

6. Appareil selon la revendication 5, dans lequel l'unité d'acquisition est configurée en outre pour :
acquérir un intervalle de chevauchement de fréquences entre un spectre du second DSLAM et un spectre du premier DSLAM conformément à la table de plan de spectre du second DSLAM et de la table de plan de spectre du premier DSLAM, et sélectionner, à partir de l'intervalle de chevauchement de fréquences, au moins une fréquence comme fréquence correspondant à l'au moins une sous-porteuse prédéfinie.

7. Appareil selon la revendication 5 ou 6, dans lequel l'unité d'acquisition est configurée spécifiquement pour :
sélectionner, à partir d'un intervalle de chevauchement de fréquences qui existe entre un spectre amont du premier DSLAM et un spectre aval du second DSLAM, ou d'un intervalle de chevauchement de fréquences qui existe entre un spectre aval du premier DSLAM et un spectre amont du second DSLAM, au moins une fréquence comme la fréquence correspondant à l'au moins une sous-porteuse prédéfinie.

8. Système de détection de ligne de brouillage, comprenant :
un système de gestion de réseau, configuré pour donner instruction, conformément à un type de brouillage qui doit être détecté, à un premier multiplexeur d'accès de ligne d'abonné numérique, DSLAM, d'envoyer, sur au moins une sous-porteuse prédéfinie, un signal de test de boucle asymétrique SELT ; acquérir une valeur de paramètre de détection de ligne correspondant à l'au moins une sous-porteuse prédéfinie sur un second DSLAM, et une valeur de paramètre de détection de ligne correspondant à une sous-porteuse voisine, dans lequel les valeurs de paramètres de détection de ligne sont acquises conformément au type de brouillage et sont rapportées par le second DSLAM après que le premier DSLAM envoie le signal SELT ; et quand il est déterminé qu'une différence entre la valeur de paramètre de détection de ligne correspondant à l'au moins une sous-porteuse prédéfinie et la valeur de paramètre de détection de ligne correspondant à la sous-porteuse voisine atteint un seuil prédéfini, déterminer qu'une ligne correspondant à l'au moins une sous-porteuse prédéfinie est une ligne de brouillage, et déterminer que le premier DSLAM est une source de brouillage du second DSLAM ;
le premier DSLAM, configuré pour envoyer, sur l'au moins une sous-porteuse prédéfinie, un signal SELT ; et
le second DSLAM, configuré pour : après que le premier DSLAM envoie le signal SELT, rapporter, conformément au type de brouillage, la valeur de paramètre de détection de ligne correspondant à l'au moins une sous-porteuse prédéfinie, et la valeur de paramètre de détection de ligne correspondant à la sous-porteuse voisine de l'au moins une sous-porteuse prédéfinie.
